# EUROPEAN PATENT APPLICATION

(11) **EP 3 002 723 A1**
(43) Date of publication of application: **06.04.2016**
(21) Application number: 14460060.8
(22) Date of filing: 04.10.2014
(51) Int. Cl.: G06Q 30/00, G06Q 30/02

(54) **Method and system of communication and the information exchange architecture designed to handle and control the legality of the products**

(71) Applicant: Nawrocki, Piotr, 88-100 Inowroclaw (PL)
(72) Inventor: Nawrocki, Piotr, 88-100 Inowroclaw (PL)
(74) Representative: Sielewiesiuk, Jakub

(57) **Abstract**

Communication system with information exchange architecture within the DTA registry, designed to handle and control the legality of any commercial products, using software and applications for smartphones, characterized in that it has an independent data concentrator **1,** data management system **2** with external certification and/or control systems, and a controller **3** with a system application on a smartphone **4,** and as billing system **5** that supports payment and tags **6,** to verify the legality via a smartphone. The legal owner of the product developer, publisher, author, etc. **7, 8** through the system has the ability to review the legality of the product **6** and enforce property rights

## Description

The present invention relates to a method and system of communication with the information exchange architecture within the DTA registry, designed to handle and control the legality of any commercial products, using software and applications for smartphones, allowing the identification of a product and information about its origin and legality.

The problems of control and verification of copyright and amount of capital expenditures is faced by publishers, authors and creators of all kinds of copyrighted objects and exclusive rights to products of various industries.

For example, the publishing market is affected by a great problem of illegal book reprints done by publishing houses without the authors' permission. Another illegal method is scanning and copying publications. A similar situation occurs in the markets of cosmetics, pharmaceutics, packaging, tobacco and other products subject to excise duty, as well as on a micro scale in situations where intellectual material products are illegally copied by competitors and marketed without regard to copyright. In 2011 European Union customs authorities seized more than 115 million products, for which there was a suspicion of a violation of intellectual property rights. There were, therefore, over 11 percent more than in 2010 (over 103 million). The value of seized goods reached almost 1.3 billion euros, compared to 1.1 billion in 2010.

Currently, the only widely used method of controlling the legality of a product is protecting products with holograms. Unfortunately, this method is not effective due to the counterfeiting of holograms.

The aim of the invention is to reduce illegal copying and control the legality of goods brought into the economy through the use of the method and the system using known transfer technologies and exchange of data, which enables effective control and verification of data, and location, control and monitoring of objects covered by copyright.

The system according to the invention using a web, NFC, and a product location mechanism and geotagging, as well as control mechanisms of selected levels of data access and implementing them into storage systems, and by using a smartphone as a basic working tool of the system it is a universal, easy to use and reliable method and control system suitable for any type of product. The system can be implemented in any production process without the need for complex technological changes. The database system has been designed to receive 1 billion marks (tags) per year with a long-term maintenance, and may be flexibly increased. With the implementation the system will form an integral part of the integrity and business ethics system and a gradually developed sales and information platform.

The system of the present invention includes a method of operation and communication, as well as the infrastructure of the system which a commercial solution allowing monitoring, controlling and structuring intellectual property of creators and authors, the legality of a product and exchange of economic information is based on.

The essence of the communication method and system with the architecture of the exchange of information are NFC tags containing information about the product and cooperating through mobile applications with smartphones and databases. Markers are placed on a controlled product. Authentication of a product is done by identifiers permanently sewn in at the tags production stage. The tags contain information in accordance with the needs of a producer and tag technical capabilities (in particular memory capacity): on markers issued together with information about the owner, the metadata provided by the manufacturer and subsequently the product life cycle; they are placed in a central system - the copyright/ownership registry.

Access to information contained in the system is done by a set of web applications as a portal for the registry employees, authors, publishers, B2B automatic document exchange systems with external systems, external registries, portals, publishers, producers' systems, and interface for mobile phones or dedicated devices.

System mobile applications control the genuineness of a product and manage the work of auditors. The auditor during an inspection receives online information confirming the genuineness of a product, additional information necessary to properly acknowledge genuineness. At the same time, such data will be registered as a marker ID, information about the time and location (GPS). If a given point of sale/inspection has a relevant marker a point of sale will be identified automatically. The application also collects information offline and confirms it together with its transfer to the database when connected to the Internet.

Selected units of the system have access to certain NFC system functions, just as an author using NFC technology uses a simple mechanism to verify the credibility of a product, s/he can monitor the impression and identify the legality of copies and geotagging each controlled product facilitates the monitoring of an impression.

A Client with NFC technology, has the ability to confirm the legality certificate, has simple access to other author's products, s/he can easily find a product on a shelf via web and in the case of an option of online sale, s/he has the opportunity make a purchase using a smartphone.

Verifying institutions and system control bodies using NFC technology receive proof of a product authentication place, use a simplified system of monitoring of registered products and are able to control agents and translocation of a product from an author to a customer.

In the system according to the invention, a number of solutions in the field of communications and communications is used, including: NFC (Near Field Communication) for encrypted product identification, Bluetooth for encrypted exchange of information, GPS (Global Positioning System) to automatically search for the location of the controlled product, Wi-Fi - used as a communication option for data exchange system, S-Beam - to encrypted identification of the product, a USB to encrypted exchange of information. In addition, a mobile phone location using GPS, available in any model of a smartphone, for possible deletion of data in case of loss or theft of a phone, login and access password and use the module or fingerprints scanning application. Identification of biometric characteristics: holder's photo, fingerprint, scan of the eyeball, etc.

For secure data transmission and authentication of applications and information, the system uses encryption algorithms in the form of secure coding. The application is a module of registry architecture; at the time of downloading a purchased application is programmed with an encryption code that during the inspection of the product is used as an authenticity identifier of the read data. The system uses mechanisms with a high degree of control encryption during the whole process of data exchange between the application and the system, and during the transmission and storage of classified information. The method and the mode of mechanisms connection provide the uniqueness of the system and the control application.

The system has built-in GPS, which provides system's location-based services, tracks product inspection location, marks it and enters the location in the system for data processing, allowing the preparation of the map of the distribution of the products and for other statistical purposes.

The system uses the application interface designed for inspection bodies designed for the exchange of information between the application databases available to government inspection bodies.

Ultimately, the system will be equipped with a manual device programmed to receive information on the location of a product at the point of sale, industry licensing monitoring or licenses for products subject to excise duty.

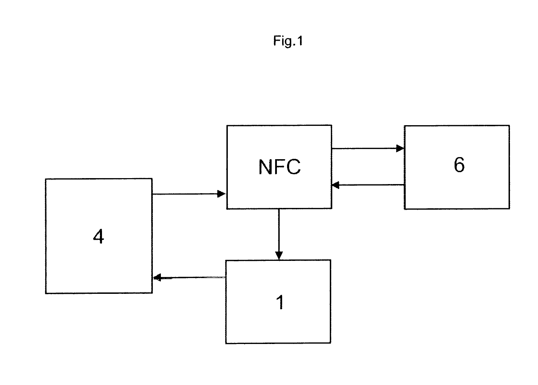

The system and method of operation of the system components is shown in the embodiment in the accompanying illustrative material, in which Figure 1 shows a diagram of the basic control and communication of system components, operation of the system and method for communicating there between, wherein the smart phone 4 with NFC technology in communication exchanges information with the tag of the product 6, followed by 1 lists the data concentrator feedback information on the legality of the product.

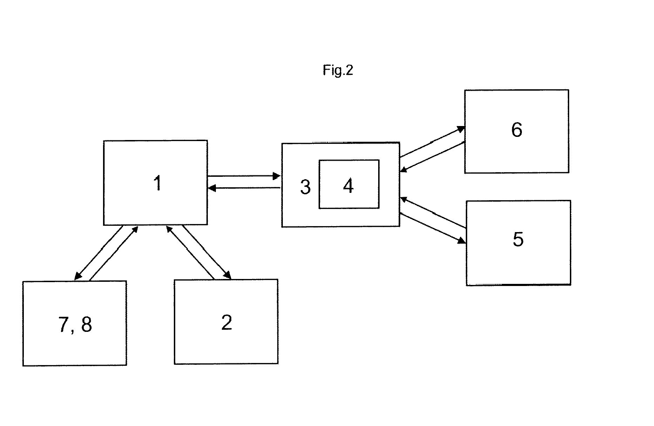

Figure 2 shows a diagram of the communication method and system for product checks, consisting of an independent data concentrator **1 -** data management system exchanging information with external certification **2** or control (governmental or commercial) systems, a controller **3** using a smartphone system application **4,** billing system **5** that supports the payment, and the marker product **6,** controlled by approximating the smartphone and confirming or denying its legitimacy in the application. The legal owner of the product developer, publisher, author, etc. **7,8** through the system has the ability to review the legality of the product **6** and enforce property rights

Partner - author or publisher 7 reports to the registry edition of the book and reports the quantity and sign a contract with the. The registry 1 under the agreement seems markers for the contracted edition, rent / sell readers / controllers, provides application data controlling party products and publishes information in the electronic register. Publisher, producer, printing company 8 publishing the book is obliged to implement the received tags in published books; infringement of all products without the tag will be a fake and situation is the basis for the initiation of legal proceedings for infringement of copyright.

Information from the tag using a smartphone with the application and NFC technology is transferred to the system-database-register. Successively, the register using the access to the Internet gives full information about the product, and the system through information exchange mechanisms via smartphone checks whether the product has a tag that protects the product from copying, locating the product or its counterfeit.

Mobile application has a number of functionality options: downloading additional applications and access to authorized resources on the basis of verification of an NFC tag; the system enables access to applications and portals, downloading resources, such as books on the basis of authentication of an authorized book, the system via the application is able to manage the additional work and information collected during the tag authentication.

The application reports the violation of intellectual property rights and starts a control procedure. In the case of product inspection it is not required to connect to the network because it also works off-line.

Starting control procedure is related to the product registration process, which requires intermediate parties such as publisher, subcontractor, distributor of the product to implement system tags in a given batch of a product.

The system uses tags to enable implementation of full public key infrastructure for high-value and smaller circulation products. Smart tags with dedicated applications allow the construction of additional functionalities, such as: in works of art: information about the work, hire life cycle; in securities and classified documents: confirmation of integrity, checksums, content; in high-end equipment: access to dedicated applications, controls etc.

Scan product and authenticity ID takes place during the inspection of the product. The encrypted data is transmitted through proximity communication, Bluetooth, RFID or adjacency device - built-in a smartphone depending on the method chosen by the user.

The central database will be maintained by a target commercial entity with regard to access to specific functions for a government agency or contractor hired by a government agency. It is up to a government agency to choose the method of registration and geolocation of a controlled product: by ordering from an intentional entity or registration with the URL of government agencies.

Smartphone interface will be maintained and regularly updated by the target operator, and the system includes the option to integrate with all available operating systems. There are several methods of valuation using the system, including free downloadable versions for end users.

The individual functions dedicated to the control methods presented in the example have been prepared in accordance with the method of operation of the industry. In the case of other areas in which the system will be implemented, it can vary considerably due to the law relevant to the industry. This does not affect the method and manner of operation of the system. Construction of the system and the application allows configuration changes in accordance with the legal requirements of relevant certifying authorities.

The system according to the invention is shown in more detail in operation embodiment

The basic element of the system are NFC tags placed by publishers and manufacturers at the stage of printing or packaging production. Tags shall be issued to the manufacturer in accordance with the ordered impression. Basic authentication of products is done by identifiers permanently sewn in at the tags production stage. The tags contain also additional information in accordance with the needs of a producer and tag technical capabilities (in particular memory capacity). All information on markers issued together with information about the owner, the metadata provided by the manufacturer and subsequently the product life cycle; they are placed in a central system - the copyright/ownership registry. Access to information contained in the system is done by a set of web applications as a portal for the registry employees, authors, publishers, B2B automatic document exchange systems with external systems (external registries, portals, publishers, producers' systems) and interface for mobile phones or dedicated devices. Mobile applications will be designed for monitoring the genuineness of products and will optionally enable managing the auditors' work. During an inspection an auditor will receive online information confirming the genuineness of a product, additional information necessary to properly acknowledge genuineness. At the same time, such data will be registered as a marker ID, information about the time and location (GPS). If a given point of sale/inspection has a relevant marker it will be possible to identify a point of sale automatically. The application will also collect information off-line and confirm it together with its transfer to the database when connected to the Internet.

## Claims

1. Communication system with information exchange architecture within the DTA registry, designed to handle and control the legality of any commercial products, using software and applications for smartphones, **characterized in that** it has an independent data concentrator **1,** data management system **2** with external certification and/or control systems, and a controller **3** with a system application on a smartphone **4,** and a billing system **5** that supports payment and tags **6,** to verify the legality via a smartphone. The legal owner of the product developer, publisher, author, etc. **7,8** through the system has the ability to review the legality of the product **6** and enforce property rights

2. Communication system architecture according to claim 1. **characterized in that** it has NFC technology, and the mechanism of product location and geotagging, as well as a control mechanism for selected data access levels and implementing them into storage systems by using a smartphone as a primary tool of the system.

3. Communication system architecture according to claim 1. **characterized in that** the NFC tags **6** affixed to the product, contain product information and collaborate via mobile applications with a smartphone and databases, and access to information contained in the system is done through a set of web applications.

4. The communication method **characterized in that** the information from the tag using a smartphone application and NFC technology is transferred to the system-database-register, sequentially the register using the Internet provides information about the product, and the system checks via smartphone whether the product has a tag locating the product or its counterfeit.
